# EUROPEAN PATENT APPLICATION

(11) **EP 3 441 544 A1**
(43) Date of publication of application: **13.02.2019**
(21) Application number: 16898065.4
(22) Date of filing: 27.04.2016
(51) Int. Cl.: E04G 21/16, B33Y 30/00, B33Y 80/00

(54) **METHOD FOR THE THREE-DIMENSIONAL PRINTING OF BUILDINGS (VARIANTS) AND DEVICE FOR THE IMPLEMENTATION THEREOF**

(30) Priority: 04.04.2016 RU 2016112588
(71) Applicant: Kulmagambetov, Anuar Rajhanovich, Moscow 127410 (RU)
(72) Inventor: Kulmagambetov, Anuar Rajhanovich, Moscow 127410 (RU)
(74) Representative: Spengler, Robert
(86) International application number: PCT/RU2016/000248
(87) International publication number: WO 2017/176150

(57) **Abstract**

The invention relates generally to the field of construction, and in particular, to the method for constructing buildings. The technical problem of the present invention to be solved consists in ensuring the possibility of fabrication of buildings with a stronger structure. Solution to the technical problem for the method for 3D printing of buildings consisting in deposition of the material of walls by a print head as the print head is moved along the 3D coordinates of future walls is achieved by simultaneous utilization of several print heads, simultaneous loading the material into the print heads, melting the material in print heads, dosed feeding of the molten material through an opening in the print heads as the heads are moved along the 3D coordinates, as the building is constructed. Solution to the technical problem for the method for 3D printing of buildings consisting in deposition of the material of walls by a print head as the print head is moved along the 3D coordinates of future walls is achieved by simultaneous loading of the material into the print head, melting the material in the print head, and dosed feeding of the molten material through an opening in the print head as the head is moved along the 3D coordinates resulting in formation of the structure of a building; aligning the non-hardened material; furthermore, additional structural elements are mounted as the building structure is formed. The technical problem for the device to be used to implement the method for 3D printing of buildings containing a print head and a mechanism for 3D positioning of the print head is solved by utilizing a glass melting furnace as a print head, having an aligning device for aligning the surface of the wall located so as to make formation of the plane of the wall possible after the material was deposited by the print head.

## Description

The invention relates generally to the field of construction, and in particular, to the method for constructing buildings.

The prior art analog disclosed in the RF patent No. 2,371,557, with the priority date October 27, 2009, describes the method for construction of buildings wherein wall panels, partitions and floors are manufactured and then mounted using electric hoists of the overhead gantry crane; wall panels, partitions and floors are fabricated by melting of rocks and this mixture is used to cast metal and stone workpieces.

The shortcoming of the prior art analog consist in its low efficiency, since building components are first cast into molds and subsequently the individual components are assembled into a building.

The method for 3D printing of buildings has formerly been disclosed in a number of patents, such as China patent CN204728708, German patent DE202015002974, and China patent CN204940868, with the priority date January 6, 2015, which was selected as a prototype consisting in using a print head to deposit the material of walls as the said print head is moved along the 3D coordinates of future walls.

The prior art device prototype disclosed by China patent CN204940868, with the priority date January 6, 2015, was selected as a prototype containing a print head and the mechanism for 3D positioning thereof.

The shortcomings of the prior art prototype of the method and the prototype of the device consist in insufficient strength of the building structures manufactured by this method utilizing this device, since materials with poor mechanical properties are used for printing, thereby preventing the possibility of printing multi-story buildings.

The technical problem solved by the present invention consists in ensuring the possibility of fabricating buildings with a stronger structure.

The technical result accomplished by the present invention consists in broadening the scope of application of the method for printing buildings to printing multi-storey buildings wherein the wall material needs to have stronger characteristics than those of single-storey buildings, while walls need to be reinforced to sustain greater loads; and also in ensuring the possibility of multilayer printing of walls using various materials to form coatings that have auxiliary functions, including ensuring wear resistance and decorative function.

In the first embodiment of the method for 3D printing of buildings, wherein material of walls is deposited by a print head as said print head is moved along the 3D coordinates of future walls, the technical problem is solved by simultaneous utilization of several print heads, simultaneous procedures of loading the material into said print heads, melting the material in the print heads, and dosed feeding of the melted material through an outlet in the print heads as said heads are moved along the 3D coordinates, thus forming the structures of the building.

In the second embodiment of the method for 3D printing of buildings, wherein material of walls is deposited by a print head as said print head is moved along the 3D coordinates of future walls, the technical problem is solved by simultaneous utilization of the procedures of loading the material into a print head, dosed feeding of the molten material through an outlet in the print head as the said head is moved along the 3D coordinates, thus forming the structure of the building; alignment of non-hardened material, as well as installation of additional structural elements of the building as the final structure is being formed.

In the device for implementing the method for 3D printing of buildings, which contains a print head and the mechanism for 3D positioning of said print head, the technical problem is solved by utilization of a glass melting furnace as a print head, presence of an aligning device for aligning the wall plane, which is located so as to enable the formation of the wall surface after the material of the wall was deposited by the print head.
Fig. 1 illustrates schematically a perspective view of the print head and the glass melting furnace.
Fig. 2 illustrates schematically a side view of the glass melting furnace.
Fig. 3 illustrates schematically a manipulator mechanism installing a beam of the building being constructed.
Fig. 4 illustrates schematically a top view of the 3D positioning mechanism.

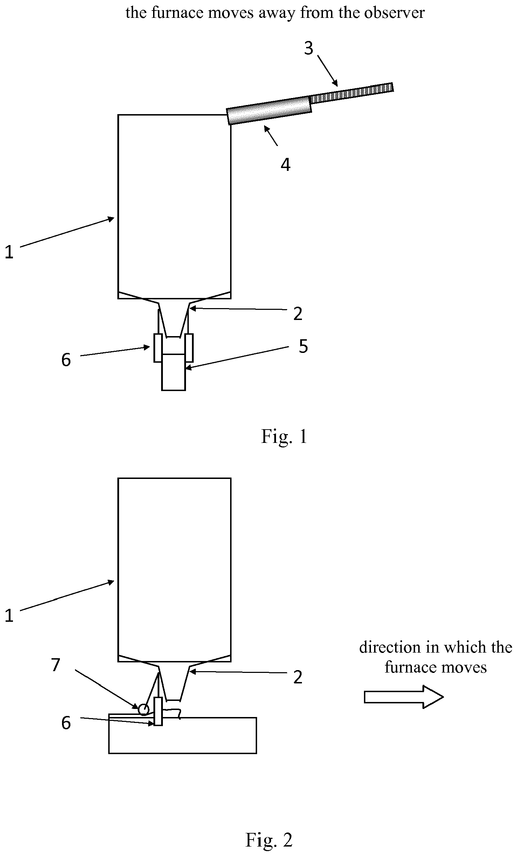

The print head is a mobile glass melting furnace 1 shown in Figs. 1 and 2, which is utilized for melting and feeding the molten material in a dosed manner. Each furnace has an outlet 2. For construction of walls, the cross-section of the outlet 2 is rectangular. The outlet 2 has its own autonomous heating system (not shown) to ensure the optimal flow of the melt and for starting operation after an emergency stop. The heating system consists of several layers. The first layer, which directly contacts the melt, has a fine perforating system to supply hot air and create the "air cushion" effect inside the nozzle, which reduces adhesion of the melt to the walls. Ultrasonic transducers mounted on the outer wall of the furnace 1 (not shown) induce air vibration and improve melt outflow. The perforation and air supply system forms the direction of movement of air currents along the melt outflow, thereby facilitating melt outflow. The layer heating the outlet 2 is formed above the air cushion; it typically is an inductive transducer. Material is fed through a flexible hose 3 and a dosing unit 4, wherein the raw material is fed from the flexible hose 3. The dosing unit 4 is a pipe wherein there is an auger conveyor aiming to move the material; it acts as a buffer component and is used to ensure the stable flow of raw material under high pressure before it reaches the furnace 1. The dosing unit 4 is required because the material is melted in the furnace 1 under pressures above the atmospheric pressure. Special rotating rollers 6, which are attached to the furnace 1 and move together with the furnace 1, are employed for aligning the material of the newly formed section of the wall 5, which is plastic before it cools down and may be easily deformed during cooling. The entire surface of the said aligning rotating roller 6 is perforated. Compressed air is supplied from the inside of the roller 6, thereby creating the "air cushion". The roller 6 aligns the wall edge after the hot melt flows out; thereafter the melt hardens rapidly to fix the shape acquired due to the action of roller 6. An aligning roller 7 lying in the horizontal plane and shown in Fig. 2 is mounted if a saturated gas needs to be added to the melt. The function of the said roller consists in vertical compression of the melt to prevent the formation of a convex horizontal surface.

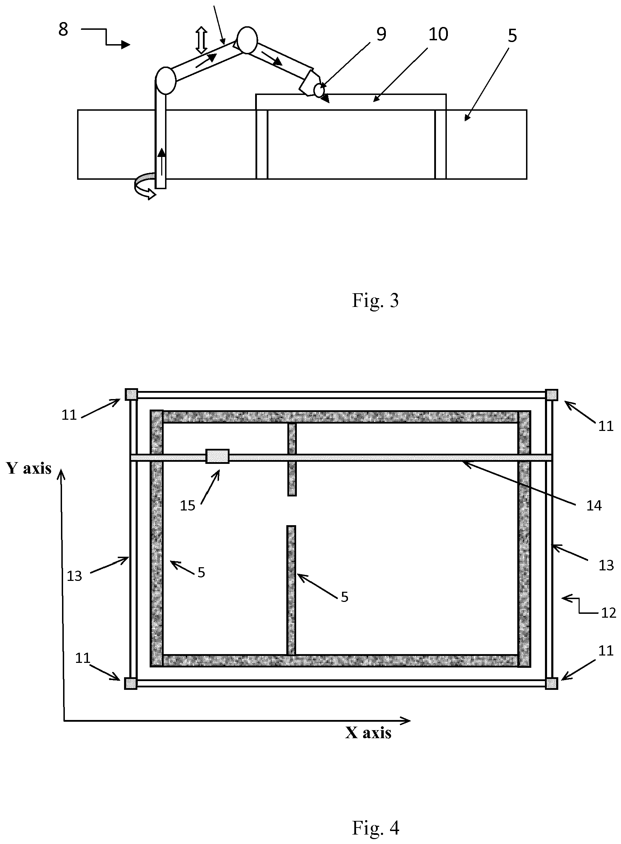

The manipulator mechanism 8 shown in Fig. 3 is a robotic gripper arm 9 controlled by the signals transmitted by a computer. Said manipulator mechanism 8 is used for 3D positioning of joists 10 and other supporting structures, as well as for screwing anchors into building blocks and placing reinforcing bars.

The key element of constructing a building using the present method and device consists in utilizing the conventional 3D positioning mechanism shown in Fig. 4, wherein pillars 11 and frame 12 are connected into a truss. Frame 12 moves along said pillars 11, along the Z axis oriented vertically. Said frame 12 contains guide bars 13 wherealong the portal 14 can be moved (along the Y axis). Carriage 15 containing an object is moved along the guide bar of portal 14 along the X axis, thereby making it possible to deliver the object in any point of the 3D space within the building being constructed along any direction, within the aforedescribed movements. Movement of an object along each axis is regulated by independent computer-controlled reversible motors. In the present method and device, glass melting furnaces 1 and the manipulator mechanism 8 are the movable objects. One carriage 15 with furnace 1 is usually mounted onto one portal 14. There can be several portals 14. To make casting of walls in complex-shaped and extensive structures faster, said furnaces 1 can be moved both within their own horizontal sectors or their sectors can partially overlap (at the same height Z), while the carriages are mounted on the common portal 14 but on different carriages 15. Therein, at certain time points some additional furnaces 1 will be waiting to be moved into their operating space.

One example of a specific implementation of the first embodiment of the method for 3D printing of buildings using the present invention will be now more particularly described.

Three print heads are used in said example of specific implementation. Mobile glass melting furnaces 1 are the said print heads, wherein one of said furnaces is shown in Figs. 1 and 2. The furnaces are used to melt raw material and feed the melt in a dosed manner to the planned sites of construction of building structures such as walls. Therefore, the furnaces are moved in 3D space using a 3D positioning mechanism along the trajectories corresponding to the arrangement of walls 5 of the building under control of a computer program, same as in a 3D printer. Thereupon, the process of fabricating structures for buildings is referred to as printing. From physical standpoint, the process of feeding melt is known as casting; therefore, we will subsequently use the term "casting" to describe feeding of the melt.

The density of construction material is controlled by composition of the raw material, temperature of the melting process, and pressure generated in the furnace. The first furnace 1 is an induction furnace intended for casting of the exterior surfaces of walls of buildings, columns and other structures requiring increased resistance to atmospheric factors and mechanical impact. Said furnace is used for casting the material with density ranging between 400 and 4000 kg/m³. The second furnace 1 is a direct resistance heating electrical furnace. Said furnace is used for casting the low-thermal conductivity melt: to cast walls 5 of buildings wherein material has density ranging from 150 to 500 kg/m³. Charge mixture is used as raw material for the first two furnaces 1. Said charge mixture contains 70-98% of quartz sand, while the remaining portion thereof consists of various additives such as sodium carbonate, lime, chalk, sodium sulfate, powdered glass, and other chemical substances to impart additional properties such as color, density, and specific weight. The third furnace 1 is the induction furnace for casting metal from high-quality metal raw material, scrap metal or metal preforms.

Prior to erection of a building, the 3D positioning mechanism is assembled at the future construction site. Prior to printing a building, materials are loaded into hoppers (not shown) that are attached to frame 12 of said 3D positioning mechanism and lie above the furnaces 1. A hopper stays immobile and is not moved alongside the furnace. Material is loaded from said hoppers into furnaces 1 by emptying said hoppers under gravity via flexible hoses 3. Material is pushed into furnace 1 with an auger conveyor located in the dosing unit 4 in a dosed manner. The software controlling the reversible motors of the 3D positioning mechanism is started prior to printing. Material of walls starts to be deposited after the raw material preliminarily loaded into the furnace 1 heats up sufficiently. Next, the charge mixture or metal raw material is continuously loaded into the furnace 1 to replenish the melt that was consumed. The first furnace, which has two outlets 2 separated by the distance equal to the width of the wall being built, starts to be moved by the 3D positioning mechanism along the trajectory of position of the future wall 5. While being moved, the molten material flows from the outlets 2 of furnace 1 to form the outer layers of the wall. The second furnace is moved after the first one. The said second furnace casts the less dense middle layer of the wall. Next, the third furnace is moved, feeding metal into the gaps left by the second furnace. Due to this order, the denser outer layers of the wall are cast somewhat faster than the middle layer, thereby ensuring the dynamic "mold" for the middle layer, whereas the cavities in the middle layer act as a mold for casting the reinforcing metal components of the wall. The sequence in which the furnaces are moved and the number thereof can differ from those described in the current example. These parameters are selected in accordance with the building construction program.

An example of a specific implementation of the alternative embodiment of the method for 3D printing of buildings using the present invention will be now more particularly described.

Mobile glass melting furnace 1 is utilized as a print head in the example of a specific implementation; said furnace is utilized to melt quartz sand and to feed the molten material in a dosed manner. Prior to building erection, a 3D positioning mechanism is assembled at the future construction site. The material is dosed in the same manner as in the first embodiment of the method. A software controlling the reversible motors of the 3D positioning mechanism is started prior to printing. Material of walls starts to be deposited after the raw material preliminarily loaded into the furnace 1 heats up sufficiently. The furnace 1 is moved along the trajectory of position of the future wall 5. During the movement process, the molten material flows from the outlet 2 of furnace 1 to form the wall 5. Since the material of the newly formed wall portion is plastic and can be deformed during cooling, it is aligned using specialized rollers 6 that are moved together with furnace 1. A burner (not shown) that anneals the newly cast wall is moved using the manipulator mechanism 8 three meters behind the said furnace 1. The melt flowing out of said furnace 1 has a temperature of ∼1200-1400°C. As soon as the melt leaves the furnace, its temperature drops abruptly to 500-800°C to create the temperature difference between the internal volume and the outer layers of wall 5 due to the low thermal conductivity of the material. Thereupon, the furnace 1 is followed by said burner that heats up the outer layer of wall 5 again to eliminate internal strain. Without annealing, wall 5 can be easily disintegrated as a result of minor external effect.

In the design of multi-storey buildings, there typically are reinforced concrete joists 10 above the door and window openings. Therefore, additional structural elements of building are installed using the manipulator mechanism 8 during construction of buildings using the present method. After casting a section of wall 5 limiting a window or a door opening, said manipulator mechanism 8 mounts the required joist above the window or the door opening. Furthermore, a manipulator mechanism 5 is utilized to place trays while moving furnace 1 above the sites that do not need to be filled with material. In this case, the melt flowing from outlet 2 gets into the said tray (not shown) placed under the outlet 2. The tray acts as a mold for casting park and garden structures or small-scale structural units. Furnace 1 is moved faster above certain openings where no manipulator mechanisms 8 are available, while the outflowing melt forms a thin thread above the opening, which can subsequently be easily removed. Either one or several manipulator mechanisms 8 are utilized depending on building design.

For the first embodiment of the present method, the technical result is accomplished due to the simultaneous utilization of several print heads, which enables printing structural components of buildings, wherein significant load is held by the reinforced concrete joists, the outer layers ensure wear resistance, while the middle layer ensures thermal and acoustic insulation. This makes the structure strong. The optimal weight-to-strength ratio of the structures fabricated using the present method allows utilization thereof to print multi-storey buildings wherein these factors are more important than in low-rise buildings.

For the second embodiment of the present method, the technical result is accomplished due to alignment of the non-hardened material in the building structure and by mounting some additional structural elements that cannot be printed when casting the entire building. Aligning the material before it melts ensures accuracy in dimensions of the building structure, thereby enhancing its strength and stability of the building. The alignment procedure is unavoidable when printing structures of the buildings made of melted silicates. Such materials are characterized by high strength required for 3D printing of multi-storey buildings, while simultaneously having high melting point and low hardening rate, which makes alignment of a printed structure necessary. Installation of additional elements is needed during 3D printing of multi-storey buildings. Such elements as joists for window and door openings made of steel or reinforced concrete allow one to considerably enhance floor strength, which is crucial in multi-storey building construction.

For the present device, the technical result is accomplished due to utilization of the glass melting furnace as a print head and due to presence of an aligning device in the design. Said glass melting furnace enables 3D printing of the building structures using material that has high strength parameters. The presence of the aligning device in the design of the present invention enables aligning the material before it hardens, thereby providing high accuracy in building dimensions and enhancing the general strength and stability of the building.

Further advantages of the first embodiment of the present method include:
- it allows printing decorative finishing at the same stage as printing the main structures of a building using the same print heads,
- the structures built using said method comply with the high standards of environmental safety and thermal conductivity. The environmental safety is ensured by using quartz sand, a natural inert material, as raw material for casting a building. Low thermal conductivity is ensured by the possibility to cast walls with high content of gas bubbles. Approximately 40 volume parts of gas per volume part of sand are released as quartz sand melts at the silicatization stage. Said gas forms a porous thermal insulation structure.

## Claims

1. The method for 3D printing of buildings consisting in deposition of the materials of walls by a print head as the print head is moved along the 3D coordinates of the walls, wherein several heads are utilized simultaneously and the procedures of loading the material into the print head, melting the material in the print head and feeding the molten material in a dosed manner through an opening in print heads as they are moved along the 3D coordinates are performed simultaneously as the building is being constructed.

2. The method for 3D printing of buildings consisting in deposition of the materials of walls by a print head as the print head is moved along the 3D coordinates of the walls, wherein the procedures of loading the material into the print head, melting the material in the print head and feeding the molten material in a dosed manner through an opening in the print head as the print head is moved along the 3D coordinates are performed simultaneously; additional structures are installed as the building is being constructed.

3. The device for 3D printing of buildings containing a print head and the mechanism for 3D positioning of the print head, wherein the glass melting furnace is used as a print head, an aligning device is utilized for aligning the plane of the wall located so as to enable formation of the plane of the wall after the material was deposited by the print head.
